# EUROPÄISCHE PATENTSCHRIFT

(11) **EP 1 512 591 B1**
(45) Veröffentlichungstag und Bekanntmachung des Hinweises auf die Patenterteilung: **29.10.2008**
(21) Anmeldenummer: 04019757.6
(22) Anmeldetag: 20.08.2004
(51) Int. Cl.: B60R 25/06

(54) **Kraftfahrzeug mit Wegfahrsprerre**
Vehicle with immobilizer device
Véhicule avec un dispositif d'immobilisation

(30) Priorität: 22.08.2003 DE 10338649
(43) Veröffentlichungstag der Anmeldung: 09.03.2005
(73) Patentinhaber: AUDI AG, 85045 Ingolstadt (DE)
(72) Erfinder: Kischkat, Ralf, Dr., 85057 Ingolstadt (DE); Graf, Johann, 93345 Hausen (DE); Ledendecker, Ingo, 85114 Buxheim (DE); Duba, Georg-Peter, 85101 Lenting (DE)
(74) Vertreter: Thielmann, Frank

(56) Entgegenhaltungen:
- EP-A- 0 879 743
- EP-A- 1 118 515
- WO-A-95/12506
- DE-A1- 19 930 279

## Beschreibung

Die Erfindung betrifft ein Kraftfahrzeug mit einem elektronisch gesteuerten Automatikgetriebe mit einem im Inneren des Getriebes angeordneten Getriebesteuergerät und mit einer Diebstahlsicherungsanlage mit einer Wegfahrsperrenfunktion, umfassen ein Sperr- und Entsperrsystem mit einer Systemsteuerungseinrichtung, die mit einem kraftfahrzeugseitigen Steuergerät, das im Rahmen der Wegfahrsperrenfunktion über das Systemsteuergerät sperrbar ist, kommuniziert.

Bei Kraftfahrzeugen neueren Typs - ein Kraftfahrzeug der eingangs genannten Art ist beispielsweise aus EP 1 118 515 A2 bekannt - wird eine Diebstahlsicherungsanlage mit einer Wegfahrsperrenfunktion in der Regel standardmäßig vorgesehen. Die Diebstahlsicherungsanlage umfasst ein Sperr- und Entsperrsystem mit einer Systemsteuerungseinrichtung. Über die Systemsteuerungseinrichtung wird zum einen erfasst, ob der in das Zündschloss gesteckte Zündschlüssel "berechtigt" ist, den Betrieb des Fahrzeugs zu initiieren. Solche Zündschlüssel verfügen in der Regel über einen Transponder, der über eine zündschlossnah angeordnete geeignete Leseeinrichtung ausgelesen wird. Im Systemsteuergerät ist eine entsprechende Vergleichskodierung hinterlegt, über die der richtige Zündschlüssel erkannt werden kann. Ist der Zündschlüssel verifiziert, kommuniziert das Systemsteuergerät bei bekannten Diebstahlanlagen mit einem Motorsteuergerät, das sich zunächst gegenüber dem Systemsteuergerät über eine steuergerätespezifische Kodierung ebenfalls identifiziert, wozu im Systemsteuergerät eine entsprechende Vergleichskodierung hinterlegt ist. Nach entsprechender Identifizierung des Motorsteuergeräts fragt dieses beim Systemsteuergerät wegen einer Starterlaubnis nach, die vom Systemsteuergerät dann gegeben wird, wenn der richtige Zündschlüssel verifiziert wurde. Anschließend kann der Motor gestartet und der Betrieb aufgenommen werden.

Wenngleich bekannte Diebstahlsicherungsanlagen einen hohen Sicherheitsstandard gegen einen unberechtigten Fahrzeugbetrieb bieten, besteht gleichwohl die Möglichkeit, die Diebstahlsicherungsanlage zu umgehen und das Fahrzeug zu betreiben, wenngleich der Betreiber nicht im Besitz des O-riginalschlüssels ist. Hierzu besteht beispielsweise die Möglichkeit, das originale Motorsteuergerät gegen ein modifiziertes Motorsteuergerät auszutauschen, das nicht mehr mit dem Systemsteuergerät kommuniziert beziehungsweise für die Starterlaubnis kein entsprechendes Signal vom Systemsteuergerät benötigt, bei dem es vielmehr ausreichend ist, wenn lediglich vom Zündschloss ein Signal gegeben wird, dass ein Schlüssel eingeführt und der Anlassbefehl gegeben wurde. Auch ist es denkbar, zur Umgehung der Diebstahlsicherungsanlage auf das originale Motorsteuergerät eine On-Top-Platine zu setzen und entsprechend zu kontaktieren, die ebenfalls nicht auf etwaige vom Systemsteuergerät eingehende Informationen reagiert und einen Motorbetrieb trotz eigentlich bestehender Wegfahrsperre ermöglicht. Auch hier ist es also möglich, unter Verwendung eines beliebigen Zündschlüssels das Kraftfahrzeug zu betreiben. Nachdem das Motorsteuergerät sehr gut und einfach zugänglich ist, ist eine relativ einfache Manipulation möglich.

Der Erfindung liegt damit das Problem zugrunde, ein Kraftfahrzeug anzugeben, das einen höheren Sicherheitsstandard gegen eine unbefugte Inbetriebnahme bietet.

Zur Lösung dieses Problems ist bei einem Kraftfahrzeug der eingangs genannten Art erfindungsgemäß vorgesehen, dass das Systemsteuergerät mit dem im Inneren des Getriebes angeordneten Getriebesteuergerät kommuniziert und den Betrieb des Getriebesteuergeräts und über dieses die über das Getriebesteuergerät geschalteten Funktionen bedarfsabhängig sperrt oder freischaltet.

Beim erfindungsgemäßen Kraftfahrzeug ist die Wegfahrsperrenfunktionalität in einem Getriebesteuergerät, das im Inneren des Getriebes angeordnet ist, implementiert. Dieses Getriebesteuergerät ist von Außen nur sehr schwer zugänglich, hierzu wäre es erforderlich, das Getriebeöl abzulassen, anschließend das Getriebe zu öffnen und das Getriebesteuergerät auszubauen, um anschließend die Manipulation vorzunehmen. Hiermit ist ein beachtlicher Montage- und Zeitaufwand verbunden, der ein unbefugtes Inbetriebnehmen in der Regel verhindert. Die Funktion der beim erfindungsgemäßen Kraftfahrzeug vorgesehenen Diebstahlsicherungsanlage sieht nun zunächst die Verifizierung des "berechtigten" Zündschlüssels über das Systemsteuergerät vor, wonach die Identifizierung des Getriebesteuergeräts und anschließend dessen Freischaltung erfolgt, wenn der richtige Zündschlüssel zugeführt wurde. Für den Fall, dass ein falscher Zündschlüssel zugeführt wird, bleibt das Getriebesteuergerät gesperrt, das heißt, das Systemsteuergerät gibt kein Freischaltsignal, das den Betrieb des Getriebesteuergeräts und über dieses die über das Getriebesteuergerät geschalteten Funktionen ermöglichen würden. Mit dem erfindungsgemäßen Kraftfahrzeug kann also der Sicherheitsstandard deutlich erhöht werden. Denn es ist annähernd unmöglich, in der in der Regel kurzen zur Verfügung stehenden Zeit zur Vornahme der Manipulation die aufwendigen Arbeiten am Getriebe vorzunehmen.

Eine besonders vorteilhafte Weiterbildung des Erfindungsgedankens sieht vor, dass das Systemsteuergerät mit wenigstens einem weiteren kraftfahrzeugseitigen und getriebeexternen Steuergerät kommuniziert, das über das Systemsteuergerät sperrbar oder freischaltbar ist, wobei es sich bei diesem weiteren Steuergerät zweckmäßigerweise um das Motorsteuergerät, das bereits Teil bekannter Diebstahlsicherungsanlagen ist, handelt. Bei dieser Erfindungsausgestaltung wird der Sicherheitsstandard noch weiter erhöht, da in die Wegfahrsperrenfunktionalität zwei separate Steuergeräte eingebunden sind, die zu manipulieren wären, um das Kraftfahrzeug unbefugt zu betreiben. Wird nur ein Steuergerät manipuliert, bleibt in jedem Fall das zweite gesperrt, da dieses kein Freigabesignal über das Systemsteuergerät erhält. Wird beispielsweise wie bisher mitunter der Fall das Motorsteuergerät beispielsweise durch Verwendung der On-Top-Platine manipuliert und versucht, das Kraftfahrzeug mit einem beliebigen Zündschlüssel zu betreiben, so gelingt es zwar den Motor anzulassen, nachdem aufgrund der Manipulation am Motorsteuergerät der Umstand, dass das Systemsteuergerät die "Nichtberechtigung" des Zündschlüssels erkannt hat, keine Rolle für den Motorstart spielt. Versucht man nun aber einen Gang einzulegen, so fragt das Getriebesteuergerät beim Systemsteuergerät, das nach wie vor mit diesem kommuniziert, wegen der Starterlaubnis an. Nachdem das Systemsteuergerät zwar das originale Motorsteuergerät identifiziert hat, jedoch den "nichtberechtigten" Zündschlüssel erkannt hat, gibt das Systemsteuergerät keine Starterlaubnis an das Getriebesteuergerät, das nach wie vor gesperrt bleibt. Es wird dann beispielsweise kein Gang eingelegt, oder es bleiben die Räder blockiert etc.

Zur weiteren Erhöhung des Sicherheitsstandards kann vorgesehen sein, dass das Systemsteuergerät mit wenigstens einem weiteren im Getriebe angeordneten Steuergerät kommuniziert, wobei jedes Steuergerät über das Systemsteuergerät separat sperrbar oder freischaltbar ist. Nach dieser Erfindungsausgestaltung ist also ein drittes separates Steuergerät in die Diebstahlsicherungsanlage eingebunden, wodurch der Sicherheitsstandard maximiert wird, da eine Manipulation von drei Steuergeräten annähernd unmöglich auf die Schnelle vor Ort durchführbar ist.

Wie beschrieben besteht die Möglichkeit, zur Realisierung der Wegfahrsperrenfunktion bei Sperren des oder eines im Getriebe angeordneten Steuergeräts zu verhindern, dass ein Gang eingelegt wird, was beispielsweise dadurch unterbunden werden kann, dass der Kraftschluss im Getriebe unterbrochen wird. Auch besteht die Möglichkeit, den Kraftschluss zu den Antriebsrädern zu unterbrechen oder die Antriebsräder unmittelbar zu blockieren. In jedem Fall wird über das oder die gesperrten Getriebesteuergeräte der Betrieb des Getriebes gesperrt, so dass das Fahrzeug nicht bewegt werden kann.

Besonders zweckmäßig ist es, wenn das oder ein im Getriebe angeordnetes Steuergerät an oder in einer Ventilbaugruppe des Getriebes angeordnet ist. Das in diesem Fall als Hybridgerät ausgeführte Steuergerät befindet sich an einem Mechatronikbauteil, das die elektrisch über das Getriebesteuergerät gesteuerte Ventilbaugruppe umfasst. Über diese Ventilbaugruppe wird der Fluidfluss zum nachgeschalteten Getriebe eines stufenlosen Automatikgetriebes gesteuert. Hierüber wird der Kraftschluss im Getriebe realisiert, der dann, wenn das Steuergerät gesperrt ist, unterbrochen ist. Im Rahmen einer Manipulation müsste die komplette Ventilbaugruppe, bei der es sich um ein relativ großes mechatronisches Bauteil handelt, ausgebaut werden, was wie beschrieben sehr aufwendig ist, und neben dem Anheben des Fahrzeugs auch das Ablassen des Motoröls voraussetzt.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung eines erfindungsgemäßen Kraftfahrzeugs einer ersten Ausführungsform, und
- Fig. 2: eine Prinzipdarstellung einer weiteren Ausführungsform einer Diebstahlsicherungsanlage.

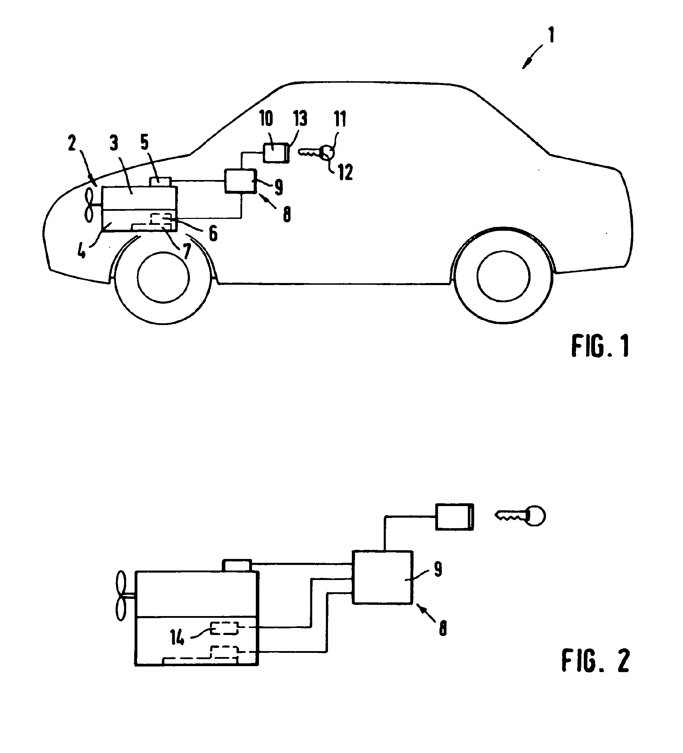

Fig. 1 zeigt ein erfindungsgemäßes Kraftfahrzeug 1 mit einem Antriebsaggregat 2 bestehend aus einem Motor 3 und einem Getriebe 4. Dem Motor 3 ist ein seinen Betrieb steuerndes Motorsteuergerät 5 zugeordnet. Im Inneren des Getriebes 4 ist ein Getriebesteuergerät 6 angeordnet, das an einer mechatronischen Ventilbaugruppe 7 des als vorzugsweise stufenloses Automatikgetriebe ausgebildeten Getriebes 4 angeordnet ist. Die Steuergeräte 5, 6 sind in eine Diebstahlsicherungsanlage 8 eingebunden, die ein Systemsteuergerät 9 umfasst, das beispielsweise im Armaturenbrett angeordnet ist und in der Regel auch andere Aufgaben übernimmt. Das Systemsteuergerät 9 kommuniziert wie beschrieben mit den beiden Steuergeräten 5 und 6 sowie dem Zündschloss 10, in das zum Starten des Fahrzeugs ein Zündschlüssel 11 zu stecken ist.

Soll das Kraftfahrzeug 1 in Betrieb genommen werden, wird wie beschrieben zunächst der Zündschlüssel 11 in das Zündschloss 10 gesteckt. Am Zündschlüssel 11 befindet sich ein Transponder 12, der ein Magnetfeld aussendet, das über ein geeignetes Erfassungsmittel 13 am Zündschloss erfasst wird und die entsprechende Information in Form eines Identifikationssignals an das Systemsteuergerät 9 gegeben wird. Dieses überprüft nun das gegebenen Identifikationssignal mit einer in ihm permanent hinterlegten Vergleichsidentifikation, um in Abhängigkeit des Vergleichs zu erkennen, ob es sich bei dem Zündschlüssel 11 um den originalen, berechtigten Zündschlüssel handelt oder einen anderen, nicht zugelassenen Zündschlüssel. Handelt es sich bei dem Zündschlüssel 11 um den originalen Zündschlüssel, erfolgt im zweiten Schritt (dieser kann jedoch auch zeitlich vorher oder parallel laufen) die Identifikation des Motorsteuergerätes 5, das ein Identifikationssignal, gegebenenfalls auf Anfrage vom Systemsteuergerät 9, an das Systemsteuergerät 9 sendet. Das Systemsteuergerät 9 vergleicht das Identifikationssignal mit einer weiteren permanent hinterlegten Vergleichsidentifikation. Wird das originale Motorsteuergerät 5 erkannt, so wird dessen Anfrage um Starterlaubnis dadurch beantwortet, dass - nachdem der zulässige Zündschlüssel erkannt wurde - das Startsignal gegeben wird und über das Steuergerät 5 der Motor 3 gestartet werden kann.

Vorzugsweise zeitlich parallel dazu kommuniziert das Systemsteuergerät 9 mit dem Getriebesteuergerät 6. Auch dieses wird zunächst dadurch identifiziert, dass ein Identifikationssignal vom Getriebesteuergerät 6 an das Systemsteuergerät 9 gegeben wird, das das Identifikationssignal mit einer dort permanent hinterlegten Vergleichsidentifikation vergleicht. Stimmen beide überein, wird auch hier - nachdem der originale Zündschlüssel erkannt wurde - auf die Anfrage des Getriebesteuergeräts 6 um ein Starterlaubnissignal dasselbe gegeben. Damit ist auch das Getriebesteuergerät 6 freigeschaltet, der Fahrer kann nun über den üblichen Wählhebel einen Gang oder eine Fahrstufe anwählen, der oder die dann, gesteuert über das Getriebesteuergerät 6, über die Ventilbaugruppe 7 kraftschlüssig eingelegt werden kann.

Für den Fall aber, dass das Motorsteuergerät 5 in welcher Form auch immer manipuliert wurde, um das Fahrzeug auch dann in Betrieb nehmen zu können, wenn es sich bei dem Zündschlüssel 11 um einen unzulässigen, gefälschten Zündschlüssel handelt, kann beim erfindungsgemäßen Kraftfahrzeug gleichwohl die Inbetriebnahme verhindert werden. Zwar ist es aufgrund der Manipulation des Steuergeräts 5 (z.B. durch Austausch des gesamten Steuergeräts oder durch Anbau einer zusätzlichen Platine oder dergleichen) möglich, die Kommunikation mit dem Systemsteuergerät 9 insoweit zu überbrücken, als dass das Motorsteuergerät 5 keine Starterlaubnisfreigabe vom Systemsteuergerät 9 benötigt, sondern dass es ausreicht, wenn über den unzulässigen Zündschlüssel 11 im Zündschloss ein Anlasssignal (über das Steuergerät 9 oder gegebenenfalls eine separate Leitung) gegeben wird. Der Motor kann in diesem Fall angelassen werden. Gleichwohl aber kann das Fahrzeug nicht betrieben werden, da das Getriebesteuergerät 6 nach wie vor gesperrt ist. Denn dieses erhält die Starterlaubnis beziehungsweise die Freischaltung nur, wenn der originale Zündschlüssel 11 erkannt wird. Nachdem dies hier nicht der Fall ist, gibt das Systemsteuergerät 9 auf die Starterlaubnisanfrage des Getriebesteuergeräts 6 kein Freischaltsignal, das Getriebesteuergerät 6 bleibt also nach wie vor gesperrt, der Kraftschluss, der über die Ventilbaugruppe 7 realisiert werden würde, bleibt unterbunden und das Fahrzeug kann nicht bewegt werden.

Fig. 2 zeigt eine der Ausgestaltung in Fig. 1 entsprechende Ausführungsform, jedoch ist dort im Getriebe ein weiteres Getriebesteuergerät 14 in die Diebstahlsicherungsanlage 8 eingebunden. Auch das Getriebesteuergerät 14 kommuniziert mit dem Systemsteuergerät 9. Anders als das Getriebesteuergerät 6, über das der Betrieb der Ventilbaugruppe 7 und damit der Kraftschluss gesteuert wird, hat das Getriebesteuergerät 14 andere Steuerungsaufgaben, die es jedoch gleichermaßen ermöglichen, den Getriebebetrieb zu unterbrechen. Wird nun wie oben ausgeführt der korrekte Zündschlüssel erkannt, so wird wie auch das Getriebesteuergerät 6 das Getriebesteuergerät 14 freigeschalten, wenn es um Starterlaubnis anfragt.

Wird jedoch ein unzulässiger Zündschlüssel 11 erkannt, so erhält auch das Getriebesteuergerät 14 (entsprechend dem Getriebesteuergerät 6) kein Freigabesignal, da der Vergleich hinsichtlich der Zündschlüsselidentifikation im Systemsteuergerät 9 ergeben hat, dass es sich nicht um den originalen Zündschlüssel handelt und infolgedessen die Wegfahrsperre nach wie vor geschaltet bleiben muss.

## Patentansprüche

1. Kraftfahrzeug mit einem elektronisch gesteuerten Automatikgetriebe mit einem im Inneren des Getriebes angeordneten Getriebesteuergerät und mit einer Diebstahlsicherungsanlage mit einer Wegfahrsperrenfunktion, umfassend ein Sperr- und Entsperrsystem mit einer Systemsteuerungseinrichtung, die mit einem kraftfahrzeugseitigen Steuergerät, das im Rahmen der Wegfahrsperrenfunktion über das Systemsteuergerät sperrbar ist, kommuniziert,
**dadurch gekennzeichnet,**
**dass** das Systemsteuergerät (9) mit dem im Inneren des Getriebes (4) angeordneten Getriebesteuergerät (6) kommuniziert und den Betrieb des Getriebesteuergeräts (6) und über dieses die über das Getriebesteuergerät geschalteten Funktionen bedarfsabhängig sperrt oder freischaltet.

2. Kraftfahrzeug nach Anspruch 1,
**dadurch gekennzeichnet,**
**dass** das Systemsteuergerät (9) mit wenigstens einem weiteren kraftfahrzeugseitigen und getriebeexternen Steuergerät (5) kommuniziert, das über das Systemsteuergerät (9) sperrbar oder freischaltbar ist.

3. Kraftfahrzeug nach Anspruch 2,
**dadurch gekennzeichnet,**
**dass** das weitere Steuergerät ein Motorsteuergerät (6) ist.

4. Kraftfahrzeug nach einem der vorangehenden Ansprüche,
**dadurch gekennzeichnet,**
**dass** das Systemsteuergerät (9) mit wenigstens einem weiteren im Getriebe (4) angeordneten Steuergerät (14) kommuniziert, wobei jedes Steuergerät (5, 6, 14) über das Systemsteuergerät (9) separat sperrbar oder freischaltbar ist.

5. Kraftfahrzeug nach einem der vorangehenden Ansprüche,
**dadurch gekennzeichnet,**
**dass** zur Realisierung der Wegfahrsperrenfunktion bei Sperren des oder eines im Getriebe (4) angeordneten Steuergeräts (6, 14) der Kraftschluß im Getriebe (4) und/oder zu den Antriebsrädern unterbrochen ist und/oder die Antriebsräder blockiert sind.

6. Kraftfahrzeug nach Anspruch 5,
**dadurch gekennzeichnet,**
**dass** das oder ein im Getriebe (4) angeordnetes Steuergerät (6) an oder in einer Ventilbaugruppe (7) des Getriebes (4) angeordnet ist.

## Claims

1. Motor vehicle with electronically controlled, automatic transmission, featuring a transmission control unit located within the transmission, and featuring an anti-theft device which incorporates an immobiliser function, comprising a locking and unlocking system featuring a system controller which communicates with a control unit arranged on the motor vehicle, which control unit is adapted to be disabled via the system controller as part of the immobiliser function, **characterised in that** the system controller (9) communicates with the transmission control unit (6) located within the transmission (4), and disables or enables the operation of the transmission control unit (6) as the need arises, and by means thereof disables and enables the functions that are operated via the transmission control unit.

2. Motor vehicle according to claim 1, **characterised in that** the system controller (9) communicates with at least one additional control unit (5) which is arranged on the motor vehicle, external to the transmission, and which is adapted to be disabled or enabled via the system controller (9).

3. Motor vehicle according to claim 2, **characterised in that** the additional control unit is an engine control unit (6).

4. Motor vehicle according to any one of the preceding claims, **characterised in that** the system controller (9) communicates with at least one further control unit (14) located in the transmission (4), and each control unit (5, 6, 14) is adapted to be separately disabled or enabled via the system controller (9).

5. Motor vehicle according to any one of the preceding claims, **characterised in that** in order to implement the immobiliser function whenever the, or a, control unit (6, 14) located in the transmission (4) is disabled, the frictional connection in the transmission (4) and/or to the traction wheels is interrupted and/or the traction wheels are locked.

6. Motor vehicle according to claim 5, **characterised in that** the, or a, control unit (6) located in the transmission (4) is positioned on or in a valve assembly (7) on the transmission (4).

## Revendications

1. Véhicule automobile à boîte automatique commandée électroniquement comprenant un appareil de commande de boîte de vitesses disposé à l'intérieur de la boîte de vitesses et comprenant une installation antivol dotée d'une fonction antidémarrage, comportant un système de blocage et de déblocage doté d'un dispositif de commande de système, qui communique avec un appareil de commande côté véhicule automobile qui, dans le cadre de la fonction antidémarrage, peut être bloqué par l'appareil de commande de système,
**caractérisé en ce**
**que** l'appareil de commande de système (9) communique avec l'appareil de commande de boîte de vitesses (6) disposé à l'intérieur de la boîte de vitesses (4) et bloque ou libère en cas de besoin le fonctionnement de l'appareil de commande de boîte de vitesses (6) et, par l'intermédiaire de celui-ci, les fonctions commutées par l'appareil de commande de boîte de vitesses.

2. Véhicule automobile selon la revendication 1,
**caractérisé en ce**
**que** l'appareil de commande de système (9) communique avec au moins un autre appareil de commande (5) côté véhicule automobile et externe à la boîte de vitesses, qui peut être bloqué ou libéré par l'appareil de commande de système (9).

3. Véhicule automobile selon la revendication 2,
**caractérisé en ce**
**que** l'autre appareil de commande est un appareil de commande de moteur (6).

4. Véhicule automobile selon l'une quelconque des revendications précédentes,
**caractérisé en ce**
**que** l'appareil de commande de système (9) communique avec au moins un autre appareil de commande (14) disposé dans la boîte de vitesses (4), chaque appareil de commande (5, 6, 14) pouvant être bloqué ou libéré séparément par l'appareil de commande de système (9).

5. Véhicule automobile selon l'une quelconque des revendications précédentes,
**caractérisé en ce**
**que** pour réaliser la fonction antidémarrage lors du blocage de l'appareil de commande (6, 14) ou d'un appareil de commande disposé dans la boîte de vitesses (4), la liaison en force dans la boîte de vitesses (4) et/ou en direction des roues d'entraînement est interrompue et/ou les roues d'entraînement sont bloquées.

6. Véhicule automobile selon la revendication 5,
**caractérisé en ce**
**que** l'appareil de commande ou un appareil de commande (6) disposé dans la boîte de vitesses (4) est disposé sur ou dans un sous-ensemble de soupape (7) de la boîte de vitesses (4).
